(19) **Europäisches Patentamt**
**European Patent Office**
**Office européen des brevets**

(11) **EP 4 560 956 A1**

(12) **EUROPEAN PATENT APPLICATION**

(43) Date of publication:
**28.05.2025 Bulletin 2025/22**

(21) Application number: **23211283.9**

(22) Date of filing: **21.11.2023**

(51) International Patent Classification (IPC):
*H04L 5/00* (2006.01)     *H04L 1/00* (2006.01)

(52) Cooperative Patent Classification (CPC):
**H04L 5/0044; H04L 1/0025; H04L 5/0053;**
H04L 1/0003; H04L 1/0009; H04W 72/0457;
H04W 72/23

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **Tapani Tiirola, Esa**
**90620 Oulu (FI)**

• **Hugl, Klaus**
**1070 Vienna (AT)**
• **Kari, Juhani Hooli**
**90620 Oulu (FI)**
• **Tervo, Oskari**
**90450 Kempele (FI)**
• **Hakola, Sami-Jukka**
**90450 Kempele (FI)**
• **Skov, Peter**
**2500 Valby (DK)**

(74) Representative: **TBK**
**Bavariaring 4-6**
**80336 München (DE)**

(54) **MODULAR BANDWIDTH ADAPTATION SCHEME**

(57)     Method comprising:
transmitting, to a terminal, an indication of a maximum number or a maximum bandwidth size;
determining, for each of plural parallel transport blocks (TB) contained in a bandwidth part (BWP), a location and a bandwidth of the respective TB within the BWP, based on a rule and such that:
none of the plural parallel TBs has a bandwidth size larger than the maximum bandwidth size, and/or,
a number of the plural parallel TBs is not larger than the maximum number;

transmitting, to the terminal for each of the plural parallel TBs, an indication of a respective MCS;
obtaining, from a MAC layer for each parallel TB, a respective data block as a whole;
encoding and modulating, for each parallel TB, the respective data block as a whole by the respective MCS;
transmitting, to the terminal in each TB, the respective encoded and modulated data block.

Fig. 3

**Description**

Technical Field

The present disclosure relates to bandwidth allocation.

Abbreviations

| | |
|---|---|
| 3GPP | 3rd Generation Partnership Project |
| 5G/6G | 5th Generation/6th Generation |
| 5G-NR | 5th Generation New Radio |
| ACK | Acknowledgement |
| BS | Base station |
| BW | Bandwidth |
| BWP | Bandwidth part |
| CA | Carrier aggregation |
| CB | Code block |
| CBG | Code block group |
| CBW | Channel Bandwidth |
| CRC | Cyclic redundancy check |
| DCI | Downlink control information |
| DFT-s | Discrete Fourier transform spread |
| DL | Downlink |
| DLSCH | Downlink Shared Channel |
| FDRA | Frequency domain resource allocation |
| FFT | Fast Fourier transform |
| FR | Frequency range |
| HARQ | Hybrid ARQ |
| HPI | HARQ Process ID |
| HPN | HARQ process number |
| ID | Identifier |
| IFFT | Inverse FFT |
| L1 | Layer 1 |
| L2 | Layer 2 |
| MAC | Medium Access Control |
| MCS | Modulation and Coding Scheme |
| MPR | Maximum Power Reduction |
| NDI | New data indicator |
| OFDM | Orthogonal frequency division multiplexing |
| PCH | Paging Channel |
| PDCCH | Physical downlink control channel |
| PDSCH | Physical downlink shared channel |
| PDU | Protocol Data Unit |
| PDxCH | PDCCH or PDSCH |
| PRB | Physical resource block |
| PUSCH | Physical uplink shared channel |
| RB | Resource block |
| RBG | Resource block group |
| RE | Resource Element |
| RIV | Resource Indication Value |
| RRC | Radio Resource Control |
| RV | Redundancy version |
| Rx | Reception |
| SCS | Subcarrier spacing |
| TB | Transport block |
| TBG | Transport block group |

| TBS | Transport block size |
|---|---|
| TCI | Transmission Coordination Indication |
| TRP | Transmission and reception point |
| Tx | Transmission |
| UE | User Equipment |
| UL | Uplink |

Background

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3rd generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks including 5G advanced networks, cellular 2nd generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3rd Generation Partnership Project (3GPP), Telecoms & Internet converged Services & Protocols for Advanced Networks (TISPAN), the International Telecommunication Union (ITU), 3rd Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Summary

It is an object to improve the prior art.

According to a first aspect, there is provided an apparatus comprising:

means for receiving, from a base station, an indication of at least one of a maximum number or a maximum bandwidth size;

means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

means for receiving, from the base station for each of the plural parallel transport blocks contained in the bandwidth part or the channel, respectively, an indication of a respective modulation and coding scheme;

means for obtaining, from a medium access control layer for each parallel transport block of a set of parallel transport blocks among the plural parallel transport blocks contained in the bandwidth part or the channel, respectively, a respective data block as a whole;

means for encoding and modulating, for each parallel transport block of the set, the data block obtained for the respective transport block as a whole by the modulation and coding scheme indicated for the respective transport block to obtain a respective encoded and modulated data block;

means for transmitting, to the base station in each transport block of the parallel transport blocks of the set, the respective encoded and modulated data block.

According to a second aspect, there is provided an apparatus comprising:

means for receiving, from a base station, an indication of at least one of a maximum number or a maximum bandwidth size;

means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

means for receiving, from the base station for each of the plural parallel transport blocks contained in the bandwidth part or the channel, respectively, an indication of a respective modulation and coding scheme;
means for receiving, from the base station in each of one or more transport blocks of a set of parallel transport blocks among the plural parallel transport blocks contained in the bandwidth part or the channel, respectively, a respective encoded and modulated data block;
means for demodulating and decoding, for each parallel transport block of the set of parallel transport blocks, the respective received encoded and modulated data block as a whole by the modulation and coding scheme indicated for the respective transport block to obtain a respective data block;
means for providing, for each transport block of the parallel transport blocks of the set, the respective data block to a medium access control layer as a whole.

For the apparatus according to any of the first and second aspects, one or more of the following may apply:
The rule may be predefined.
The apparatus may further comprise
means for receiving, from the base station, an indication of the rule;
means for retrieving the rule from a repository of rules based on the indication of the rule.
The rule may prescribe that for any two of the plural parallel transport blocks, an absolute value of a difference of the bandwidths of the respective two transport blocks is not larger than a bandwidth of a resource block.
If the indication of the maximum bandwidth size is received, the rule may prescribe that the bandwidths of at least all but one transport blocks of the plural parallel transport blocks are equal to the maximum bandwidth size.
The apparatus may further comprise means for informing the base station about at least one of

- a capability of the apparatus to support a number of parallel transport blocks in the bandwidth part or the channel, respectively; or
- a preferred number of parallel transport blocks in the bandwidth part of the channel, respectively, for the apparatus; or
- a capability of the apparatus to support a maximum bandwidth size of a parallel transport block in the bandwidth part or the channel, respectively; or
- a preferred maximum bandwidth size of a parallel transport block in the bandwidth part of the channel, respectively, for the apparatus.

At least one of the modulation and coding schemes indicated for the plural parallel transport blocks may be different from another one of the modulation and coding schemes indicated for the plural parallel transport blocks.
A guard band may not be provided between at least two adjacent parallel transport blocks of the plural parallel transport blocks.
At least one of the plural parallel transport blocks of the channel or the bandwidth part, respectively, may comprise another transport block in a second spatial layer different from the first spatial layer.
According to a third aspect, there is provided an apparatus comprising:

means for transmitting, to a terminal, an indication of at least one of a maximum number or a maximum bandwidth size;
means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

means for transmitting, to the terminal for each of the plural parallel transport blocks contained in the bandwidth part or the channel, respectively, an indication of a respective modulation and coding scheme;

means for obtaining, from a medium access control layer for each parallel transport block of a set of parallel transport blocks among the plural parallel transport blocks contained in the bandwidth part or the channel, respectively, a respective data block as a whole;

means for encoding and modulating, for each parallel transport block of the set, the data block obtained for the respective transport block as a whole by the modulation and coding scheme indicated for the respective transport block to obtain a respective encoded and modulated data block;

means for transmitting, to the terminal in each transport block of the parallel transport blocks of the set, the respective encoded and modulated data block.

According to a fourth aspect, there is provided an apparatus comprising:

means for transmitting, to a terminal, an indication of at least one of a maximum number or a maximum bandwidth size;

means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

means for transmitting, to the terminal for each of the plural parallel transport blocks contained in the bandwidth part or the channel, respectively, an indication of a respective modulation and coding scheme;

means for receiving, from the terminal in each of one or more transport blocks of a set of parallel transport blocks among the plural parallel transport blocks contained in the bandwidth part or the channel, respectively, a respective encoded and modulated data block;

means for demodulating and decoding, for each parallel transport block of the set of parallel transport blocks, the respective received encoded and modulated data block as a whole by the modulation and coding scheme indicated for the respective transport block to obtain a respective data block;

means for providing, for each transport block of the parallel transport blocks of the set, the respective data block to a medium access control layer as a whole.

For the apparatus according to any of the third and fourth aspects, one or more of the following may apply: The rule may be predefined.

The apparatus may further comprise means for retrieving the rule from a repository of rules; means for indicating the rule to the terminal..

The rule may prescribe that for any two of the plural parallel transport blocks, an absolute value of a difference of the bandwidths of the respective two transport blocks is not larger than a bandwidth of a resource block.

If the indication of the maximum bandwidth size is received, the rule may prescribe that the bandwidths of at least all but one transport blocks of the plural parallel transport blocks are equal to the maximum bandwidth size.

The apparatus may further comprise means for receiving, from the terminal, an indication of at least one of

- a first capability of the terminal to support a number of parallel transport blocks in the bandwidth part or the channel, respectively; or
- a preferred number of parallel transport blocks in the bandwidth part of the channel, respectively, for the terminal; or
- a second capability of the apparatus to support a maximum bandwidth size of a parallel transport block in the bandwidth part or the channel, respectively; or
- a preferred maximum bandwidth size of a parallel transport block in the bandwidth part of the channel, respectively, for the apparatus; wherein

the means for determining may be configured to determine, for each of the plural parallel transport blocks contained in the bandwidth part or the channel, respectively, the location and the bandwidth of the respective transport block within the bandwidth part or the channel, respectively, additionally based on the at least one of the first capability, the preferred number, the second capability, and the preferred maximum bandwidth size.

At least one of the modulation and coding schemes indicated for the plural parallel transport blocks may be different from another one of the modulation and coding schemes indicated for the plural parallel transport blocks.

The apparatus may further comprise means for informing the terminal explicitly on the locations and bandwidths of the plural parallel transport blocks.

A guard band may not be provided between at least two adjacent parallel transport blocks of the plural parallel transport blocks.

At least one of the plural parallel transport blocks the channel or the bandwidth part, respectively, may comprise another transport block in a second spatial layer different from the first spatial layer.

According to a fifth aspect, there is provided a method comprising:

receiving, from a base station, an indication of at least one of a maximum number or a maximum bandwidth size;
determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

receiving, from the base station for each of the plural parallel transport blocks contained in the bandwidth part or the channel, respectively, an indication of a respective modulation and coding scheme;
obtaining, from a medium access control layer for each parallel transport block of a set of parallel transport blocks among the plural parallel transport blocks contained in the bandwidth part or the channel, respectively, a respective data block as a whole;
encoding and modulating, for each parallel transport block of the set, the data block obtained for the respective transport block as a whole by the modulation and coding scheme indicated for the respective transport block to obtain a respective encoded and modulated data block;
transmitting, to the base station in each transport block of the parallel transport blocks of the set, the respective encoded and modulated data block.

According to a sixth aspect, there is provided a method comprising:

receiving, from a base station, an indication of at least one of a maximum number or a maximum bandwidth size;
determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

receiving, from the base station for each of the plural parallel transport blocks contained in the bandwidth part or the channel, respectively, an indication of a respective modulation and coding scheme;
receiving, from the base station in each of one or more transport blocks of a set of parallel transport blocks among the plural parallel transport blocks contained in the bandwidth part or the channel, respectively, a respective encoded and modulated data block;
demodulating and decoding, for each parallel transport block of the set of parallel transport blocks, the respective received encoded and modulated data block as a whole by the modulation and coding scheme indicated for the respective transport block to obtain a respective data block;
providing, for each transport block of the parallel transport blocks of the set, the respective data block to a medium access control layer as a whole.

For the method according to any of the fifth and sixth aspects, one or more of the following may apply:
The rule may be predefined.

The method may further comprise

receiving, from the base station, an indication of the rule;
retrieving the rule from a repository of rules based on the indication of the rule.

The rule may prescribe that for any two of the plural parallel transport blocks, an absolute value of a difference of the bandwidths of the respective two transport blocks is not larger than a bandwidth of a resource block.

If the indication of the maximum bandwidth size is received, the rule may prescribe that the bandwidths of at least all but one transport blocks of the plural parallel transport blocks are equal to the maximum bandwidth size.

The method may further comprise informing the base station about at least one of

- a capability of the apparatus to support a number of parallel transport blocks in the bandwidth part or the channel, respectively; or
- a preferred number of parallel transport blocks in the bandwidth part of the channel, respectively, for the apparatus; or
- a capability of the apparatus to support a maximum bandwidth size of a parallel transport block in the bandwidth part or the channel, respectively; or
- a preferred maximum bandwidth size of a parallel transport block in the bandwidth part of the channel, respectively, for the apparatus.

At least one of the modulation and coding schemes indicated for the plural parallel transport blocks may be different from another one of the modulation and coding schemes indicated for the plural parallel transport blocks.

A guard band may not be provided between at least two adjacent parallel transport blocks of the plural parallel transport blocks.

At least one of the plural parallel transport blocks of the channel or the bandwidth part, respectively, may comprise another transport block in a second spatial layer different from the first spatial layer.

According to a seventh aspect, there is provided a method comprising:

transmitting, to a terminal, an indication of at least one of a maximum number or a maximum bandwidth size;
determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

transmitting, to the terminal for each of the plural parallel transport blocks contained in the bandwidth part or the channel, respectively, an indication of a respective modulation and coding scheme;
obtaining, from a medium access control layer for each parallel transport block of a set of parallel transport blocks among the plural parallel transport blocks contained in the bandwidth part or the channel, respectively, a respective data block as a whole;
encoding and modulating, for each parallel transport block of the set, the data block obtained for the respective transport block as a whole by the modulation and coding scheme indicated for the respective transport block to obtain a respective encoded and modulated data block;
transmitting, to the terminal in each transport block of the parallel transport blocks of the set, the respective encoded and modulated data block.

According to an eighth aspect, there is provided a method comprising:

transmitting, to a terminal, an indication of at least one of a maximum number or a maximum bandwidth size;
determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

transmitting, to the terminal for each of the plural parallel transport blocks contained in the bandwidth part or the channel, respectively, an indication of a respective modulation and coding scheme;

receiving, from the terminal in each of one or more transport blocks of a set of parallel transport blocks among the plural parallel transport blocks contained in the bandwidth part or the channel, respectively, a respective encoded and modulated data block;

demodulating and decoding, for each parallel transport block of the set of parallel transport blocks, the respective received encoded and modulated data block as a whole by the modulation and coding scheme indicated for the respective transport block to obtain a respective data block;

providing, for each transport block of the parallel transport blocks of the set, the respective data block to a medium access control layer as a whole.

For the method according to any of the seventh and eighth aspects, one or more of the following may apply: The rule may be predefined.

The method may further comprise retrieving the rule from a repository of rules;

indicating the rule to the terminal.

The rule may prescribe that for any two of the plural parallel transport blocks, an absolute value of a difference of the bandwidths of the respective two transport blocks is not larger than a bandwidth of a resource block.

If the indication of the maximum bandwidth size is received, the rule may prescribe that the bandwidths of at least all but one transport blocks of the plural parallel transport blocks are equal to the maximum bandwidth size.

The method may further comprise receiving, from the terminal, an indication of at least one of

- a first capability of the terminal to support a number of parallel transport blocks in the bandwidth part or the channel, respectively; or
- a preferred number of parallel transport blocks in the bandwidth part of the channel, respectively, for the terminal; or
- a second capability of the apparatus to support a maximum bandwidth size of a parallel transport block in the bandwidth part or the channel, respectively; or
- a preferred maximum bandwidth size of a parallel transport block in the bandwidth part of the channel, respectively, for the apparatus; wherein,

for each of the plural parallel transport blocks contained in the bandwidth part or the channel, respectively, the location and the bandwidth of the respective transport block within the bandwidth part or the channel, respectively, is determined additionally based on the at least one of the first capability, the preferred number, the second capability, and the preferred maximum bandwidth size.

At least one of the modulation and coding schemes indicated for the plural parallel transport blocks may be different from another one of the modulation and coding schemes indicated for the plural parallel transport blocks.

The method may further comprise informing the terminal explicitly on the locations and bandwidths of the plural parallel transport blocks.

A guard band may not be provided between at least two adjacent parallel transport blocks of the plural parallel transport blocks.

At least one of the plural parallel transport blocks the channel or the bandwidth part, respectively, may comprise another transport block in a second spatial layer different from the first spatial layer.

Each of the methods of the fifth to eighth aspects may be a method of bandwidth adaptation.

According to a ninth aspect of the invention, there is provided a computer program product comprising a set of instructions which, when executed on an apparatus, is configured to cause the apparatus to carry out the method according to any of the fifth to eighth aspects. The computer program product may be embodied as a computer-readable medium or directly loadable into a computer.

According to some example embodiments, at least one of the following advantages may be achieved:

- Inbuilt support for Tx/Rx processing parallelization

  - A centralized element in L1 encoding/decoding but also in L2 is avoided. This means different processors (or processor cores) could handle different TBs for same UE without need for joint processing.
  - This can still be combined with transmission of single PDCCH for FDRA across all TBs (and minimized UE PDCCH search space) which is more difficult when doing CA.
  - Number of TBs/CBs supported per slot scales naturally with UE BW capability.

- Inbuilt support for decomposed FFT processing: 1:1 mapping between PDSCH/PUSCH TB FDRA "range" and "small FFT"

  - Improved UE power saving
  - Improved network energy saving

- Adaptive MCS /separate HARQ processes in frequency domain (gain potential) Providing an alternative to CA

Brief description of the drawings

Further details, features, objects, and advantages are apparent from the following detailed description of the preferred example embodiments which is to be taken in conjunction with the appended drawings, wherein:

Fig. 1 shows a spectrum comprising a CBW, a BWP within the CBW, and a TB in the BWP according to the prior art;
Fig. 2 shows a spectrum comprising a CBW, a BWP within the CBW, and plural TBs in the BWP according to some example embodiments;
Fig. 3 shows a spectrum comprising a CBW, plural BWP within the CBW, and plural TBs in each of the BWPs according to some example embodiments;
Fig. 4 shows a message sequence chart according to some example embodiments;
Fig. 5 shows an apparatus according to an example embodiment;
Fig. 6 shows a method according to an example embodiment;
Fig. 7 shows an apparatus according to an example embodiment;
Fig. 8 shows a method according to an example embodiment;
Fig. 9 shows an apparatus according to an example embodiment;
Fig. 10 shows a method according to an example embodiment;
Fig. 11 shows an apparatus according to an example embodiment;
Fig. 12 shows a method according to an example embodiment; and
Fig. 13 shows an apparatus according to an example embodiment.

Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

In 5G, a physical channel in frequency range 1 (carrier frequencies up-to 7 GHz) may have a maximum channel bandwidth of 100 MHz. With 30 kHz subcarrier spacing, inverse fast Fourier transform (IFFT) of size 4096 is needed for generating OFDM or DFT-s-OFDM waveforms for 100 MHz CBW (signal modulation) and correspondingly, FFT of size 4096 is needed for signal demodulation. This is due to the fact that there can be up-to 3300 subcarriers in this scenario, and the next FFT/IFFT size option power of two is 4096. For the transmission and reception on the physical channel, a (single) MCS is applied.

A Bandwidth Part is a contiguous set of physical resource blocks, selected from a contiguous set or subset of the common resource blocks for a given numerology on a given carrier (physical channel). Only one bandwidth part may be active at a given time both in downlink and uplink. Bandwidths parts of a channel may overlap in frequency. For the transmission and reception on a bandwidth part, the MCS of the physical channel is applied.

One or more transport channels may be transmitted on each of the physical channels. For example, PDSCH (a physical channel) may transmit a PCH and a DLSCH (transport channels). MAC layer provides the data blocks (e.g. MAC PDUs) of the transport channels. On the physical layer, the data block is encoded and modulated as a whole according to the MCS for the channel and transmitted in a transport block on a physical channel on the channel or BWP. In some cases, there may be two transport blocks on the channel or BWP for different spatial layers.

In sixth-generation (6G), wider CBWs are expected to be defined also for frequency bands below 15GHz (this frequency range which may cover frequency bands between 7GHz and 24.25 GHz may be called e.g. as FR3). A consequence is that the needed IFFT sizes increase as well. For example, a CBW of 400 MHz requires a IFFT size of 16384 (16k) for 30 kHz SCS and a IFFT size of 8192 (8k) for 60 kHz SCS. These are examples of "big FFT" sizes, which can be created as N x "small FFT", where the small FFT can be e.g. size of 4096. A SCS of 30 kHz is advantageous for spectrum sharing between 5G (in FR1) and 6G and maximizes the similarity between FR1 and FR3.

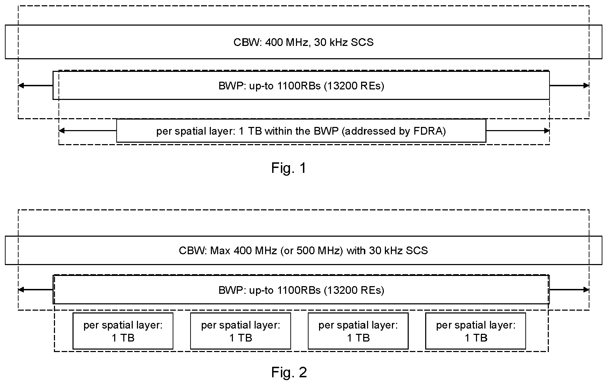

Fig. 1 illustrates, for the frequency domain, the relationship between CBW, BWP (if any) and TB for a 5G example where the CBW is extended to 400 MHz and SCS is kept at 30 kHz. As may be seen, a BWP may have e.g. up to 1100 RB, comprising, for a single symbol, e.g. 13200 RE (with 12 subcarriers per RB). An RB is the smallest granularity that may be scheduled by the scheduler. For example, an RB may comprise 12 subcarriers in frequency domain. In addition to RB, or as alternative to RB, physical resource may be called as PRB (physical resource block) which may comprise 12 subcarriers in frequency, and 7 (6) or 14 (12) symbols in time domain. The BWP is fully contained in the CBW. Correspondingly, a TB is fully contained in the respective BWP (if any) and CBW. It is addressed by FDRA. Per BWP (if any) and CBW, a single TB is transmitted at a time on a spatial layer.

In this approach, UE is assigned with a PDSCH or PUSCH allocation that ranges up to 1100 RBs. This allocation may result in the following problems:

- Limited opportunities for Tx/Rx processing parallelization

    - This may increase the hardware cost.
    - A big transport block may increase also the decoding latency.

- Limited opportunities for multi-TRP (due to single FFT)
- Lack of modularity
- Limited adaptivity in frequency domain

    - Common FFT processing for a wideband allocation
    - Common MCS & HARQ process for a wideband allocation

The allocation has the advantages of a small DCI overhead and small HARQ-ACK payload.

1. Some example embodiments provide a modular bandwidth adaptation scheme running on top of the BWP (or CBW) within a predefined resource space (i.e. within the available RBs (with respect predefined RB#0 location) and with given subcarrier spacing, and the available OFDM symbols with predefined symbol timing (e.g. w.r.t. radio frame timing)). This covers the following aspects:

According to some example embodiments, there may be multiple TBs per BWP (or channel) per spatial layer. These multiple TBs per spatial layer may be scheduled at the same time (hereinafter denoted as "parallel TBs"). Alternatively, they may be denoted as "parallel PxSCHs" and contained on parallel physical channels, for example, on PDSCH and PUSCH. In some example embodiments, the granularity of the bandwidth allocation may be limited. For example, a maximum bandwidth size and/or a minimum bandwidth size of a transport block may be indicated.

According to some example embodiments, a CBW or BWP (if any) is associated with a PDSCH or PUSCH bandwidth allocation granularity, which defines the maximum number of RBs per transport block (*Max TB bandwidth size(RB)*). The bandwidth allocation granularity may be predefined (or preconfigured). An example is shown in Table 1. As shown in Table 1, if the maximum TB bandwidth size does not exceed 332 RBs, a FFT size of 4096 ("small FFT") may be sufficient

Table1: Maximum TB bandwidth size and corresponding size of FFT (examples of different configurations)

| Config. ID | Maximum TB bandwidth size (RBs) | Size of FFT |
|---|---|---|
| 1 | 34 | 512 |
| 2 | 68 | 1024 |
| 3 | 137 | 2048 |
| 4 | 275 | 4096 |

(continued)

| Config. ID | Maximum TB bandwidth size (RBs) | Size of FFT |
|---|---|---|
| 5 | 332 | 4096 |

Max TB bandwidth size(RB) may be selected such that "a small FFT" (FFT size not larger than 4096) is sufficient. This selection may enable to decompose FFT implementation (and partial FFT usage), based on the FFT of size 4096 used for 5G. As an option, max TB bandwidth size(RB) may relate to the maximum number of RBs that the UE and/or BS implementation can process efficiently with a single processing chain (as part of parallel processing).

In some example embodiments, *Max TB bandwidth size(RB)* is a configuration parameter. Base station (gNB) may determine *Max TB bandwidth size(RB)* based on UE's indication of its max TB bandwidth size capability or preference. In addition, in some example embodiments, base station may take into account its own capability for a max TB bandwidth size or a preference in this respect. Max TB bandwidth size(RB) may be configured separately for uplink and downlink. There may be a certain default value assumed for this parameter. I.e., if the BS does not configure *Max TB bandwidth size(RB),* the default value may be applied. The default value may be defined by a 3GPP specification.

In some example embodiments, *Max TB bandwidth size(RB)* is defined by a 3GPP specification. Thus, the value may be fixed for a given BWP size, bandwidth, and/or numerology.

In one example embodiment, Max TB bandwidth size (RB) is defined to be 332 (Config. #5 in Table 1) or even up-to 350 RBs. This would enable 500 MHz CBW and 30 kHz SCS with 4 parallel TBs, each using 4k FFT (4x4096, in total 16k FFT), or 5 parallel TBs each using 4k FFT (5x4096, in total 20k FFT). As another option, it enables 500 MHz CBW and 60 kHz SCS with 5 parallel TBs using 2k FFT (5x2048, in total 10k FFT).

In some example embodiments, a minimum allocation or bandwidth size for a single TB may also be defined. This may apply preferably to scenarios with multiple parallel TBs.

TB size in bits (according to N_info in Table 2) is determined by base station, and base station can use following calculations to determine the relationships between different parameters, for example, between TB size in bits and TB bandwidth size in RBs. The TB size in bits is calculated by UE based on the parameters signaled to the UE. TB size in bits as such may be calculated similarly as currently, but its max. bandwidth size is limited (i.e., the number of RBs used to calculated one TB). Table 2 shows an example calculation how TBs are determined according to different configurations,

$$N_{symb}^{sh} = 13, N_{DMRS}^{PRB} = 0, N_{oh}^{PRB} =$$

when using parameters                              0 (the first parameter designates the number of OFDM symbols of the PxSCH allocation within slot; the second parameter designates the number of resource elements for DMRS per PRB in the scheduling duration, and the third parameter designates Overhead configured by higher layer

$$N_{RE}' = 156$$

parameter) which results in , , and assuming modulation order 4 (i.e. 16QAM), code rate ¾, and number of spatial layers 1 (assuming same parameters for each TB). Namely, in Table 2, the value in the first row (max TB bandwidth size) is taken from Table 1. The value in the 2nd row N_RE (the number of REs within a slot) is calculated as (the value in the first row)*(156). The value N_info in the 3rd row (the (intermediate) number of information bits within a TB) is calculated as (the value in the 2nd row)* 4* 3/4, where 4 comes from 16QAM, and 3/4 comes from the code rate. After determining N_info, one may determine final transport block size (TBS) according to 3GPP TS 38.214 (Sec. 5.1.3.2)

Table 2: Example of determination of TB size dependent on max TB bandwidth size

|  | Config. 1 | Config. 2 | Config. 3 | Config. 4 | Config. 5 |
|---|---|---|---|---|---|
| max TB bandwidth size (RBs) | 34 | 68 | 137 | 275 | 332 |
| N_RE | 5304 | 10608 | 21372 | 42900 | 51792 |
| N_info (per TB) | 15912 | 31824 | 64116 | 128700 | 155376 |

Different parallel TBs may have a same bandwidth size or different bandwidth sizes. If *Max TB bandwidth size(RB)* is configured or defined, the sizes are equal to *Max TB bandwidth size(RB)* or smaller.

In the proposed configuration, UE supports transmission or reception of multiple parallel TBs per BWP (or CBW). The **maximum number of parallel TBs** for a rank 1 scenario (in some example embodiments, each parallel TB may cover one or multiple TBs in the spatial domain) can be determined based on the configuration, as shown in the example of Table 3 The actual number may be calculated from the BWP size and Max TB bandwidth size (RB) in one of the following ways:

- Option 1: ceil(BWP size(RB)/Max TB bandwidth size(RB))

- Option 2: floor(BWP size(RB)/Max TB bandwidth size(RB)).
- The values shown in Table 3 have been made assuming using Option 1. Furthermore, it has been assumed that BWP size is 275RBs/100 MHz for 30 kHz SCS, and 137 RBs/100 MHz for 60 kHz SCS, respectively.

If option 1 is applied, some portion of the BWP may remain unused even if all the parallel TBs have Max TB bandwidth size(RB). If option 2 is applied, all but one of the TBs may have Max TB bandwidth size(RB). Typically, at least one of the TBs must then have a smaller bandwidth size such that all TBs are completely contained in the BWP and do not overlap.

In some example embodiments, the maximum number of parallel TBs per spatial layer (Max_number_TB) may be defined or configured. Similarly as described for the parameter Max TB bandwidth size(RB), *Max_number_TB* may be a configuration parameter. Base station (gNB) may determine *Max_number_TB* based on UE's indication of its maximum capability for parallel TBs or preference. In addition, in some example embodiments, base station may take into account its own capability for max_number_TB or a preference in this respect. Max_number_TB may be configured separately for uplink and downlink. There may be a certain default value assumed for this parameter. I.e., if the BS does not configure *Max_number_TB,* the default value may be applied. The default value may be defined by a 3GPP specification.

In some example embodiments, *Max_number_TB* is defined by a 3GPP specification. Thus, the value may be fixed for a given BWP size, bandwidth, and/or numerology.

The configuration or definition of Max_number_TB has the advantage that it reflects more closely the capability for parallel processing. In some example embodiments, both Max_number_TB and Max TB bandwidth size (RB) are configured or defined. Thus, in addition to the capability for parallel processing, one may take care that only "small FFT" (e.g. a size of 4096 or less) is needed. Table 3 indicates the Max_number_TB for different granularities, if "small FFT" size is assumed.

Max number of parallel TBs for different granularities

Table 3: Max_number_TB for different granularities and "small FFT"

| | SCS | Total BW (MHz) | Configuration ID ( indicative of the "small FFT" size) | | | |
| | | | 1 (512) | 2 (1024) | 3 (2048) | 4 (4096) |
|---|---|---|---|---|---|---|
| | 30 | 100 | 8 | 4 | 2 | 1 |
| | | 200 | 16 | 8 | 4 | 2 |
| | | 400 | 32 | 16 | 8 | 4 |
| | | 500 | 40 | 20 | 10 | 5 |
| CA only | | 800 | 64 | 32 | 16 | 8 |
| CA only | | 1000 | 80 | 40 | 20 | 10 |
| CA only | | 1600 | 128 | 64 | 32 | 16 |
| | 60 | 100 | 4 | 2 | 1 | 1 |
| | | 200 | 8 | 4 | 2 | 1 |
| | | 400 | 16 | 8 | 4 | 2 |
| | | 500 | 20 | 10 | 5 | 3 |
| CA only | | 800 | 32 | 16 | 8 | 4 |
| CA only | | 1000 | 40 | 20 | 10 | 10 |
| CA only | | 1600 | 64 | 32 | 16 | 8 |

Frequency domain resource allocation defines the actual number of parallel TBs (within the limit given by parameter **maximum number of parallel TBs)**. Fig. 2 shows an example with four parallel TBs within a BWP. In this example, CBW size is 400 MHz (or 500 MHz). Subcarrier spacing is 30 kHz. The BWP size is up-to 1100 RBs (=4x275), which corresponds to 1100 resource elements. The figure shows four parallel TBs (for PUSCH or PDSCH), each may correspond to different HARQ processes.

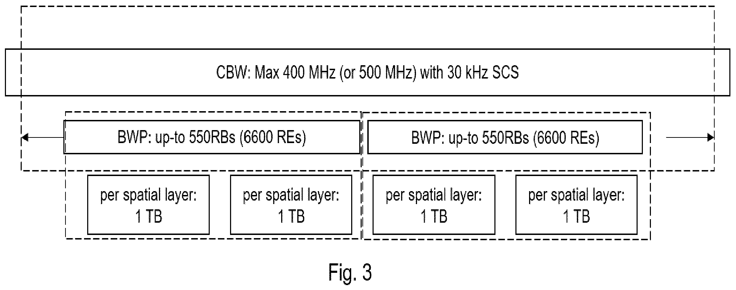

In some example embodiments, as illustrated by Fig. 3, a CBW may comprise more than one BWP, and at least one of the BWPs may comprise plural parallel TBs. In some of these example embodiments, each of the BWPs comprises plural parallel TBs. The number of parallel TBs may be the same or different in different BWPs.

In some example embodiments, BS indicates to UE the bandwidth size and location of the parallel TBs (e.g. via resource allocation grant). Thus, the allocation is most flexible.

In some example embodiments, both BS and UE determine the allocation of the TBs based on known constraints and a rule, which may be predefined (e.g. by a 3GPP spec) or configured. In particular, according to the constraints, the TBs are fully contained in the CBW or BWP (if any) and do not overlap. The number of TBs must not exceed the maximum number of parallel TBs. As an option, the bandwidth size of the TBs must not exceed Max TB bandwidth size (RB).

As an example of a rule, parallel TBs are contiguous in frequency, without any guard band in between. This means the starting RB for kth TB = 1 + ending RB for (k-1)th TB.

According to an example rule, the frequency domain resource allocation for each of the TBs is determined based on a (single) indicated frequency domain resource allocation for all the TBs and the number of TBs:

- The number M of scheduled parallel TBs may be dynamically indicated in the scheduling DCI. Alternatively the UE may determine the number M based on the allocated frequency domain resource allocation. In case of UE determination is based on the maximum number of PRBs per TB:

   ◦ For example, for Type 0 frequency domain resource allocation (i.e. RBG based resource allocation), the UE may determine the number $M$ of parallel scheduled TBs as $M = \left\lceil \frac{L}{\lceil K/P \rceil} \right\rceil$, where $L$ is the number of scheduled RBGs, K is the maximum number of PRBs per TB and $P$ is the nominal RBG size for Type 0 FDRA.

   ◦ For example, for Type 1 frequency domain allocation (i.e. RIV based), the UE may determine the number $M$ of parallel scheduled TBs as $M = \left\lceil \frac{L}{K} \right\rceil$, where $L$ is the number of scheduled PRBs (i.e. the L defined by the RIV) and K is the maximum number of PRBs per TB.

- In case of UE determination is based on the maximum number of parallel TBs per spatial layer:

   ◦ For example, for Type 0 frequency domain resource allocation (i.e. RBG based resource allocation), the UE may determine the number $M$ of parallel scheduled TBs as $M = \min\left(\left\lceil \frac{L}{\lceil R/P \rceil} \right\rceil, T\right)$, where $L$ is the number of scheduled RBGs, R is the minimum number of PRBs per TB, $P$ is the nominal RBG size for Type 0 FDRA and T is the maximum number of parallel TBs per spatial layer.

   ◦ For example, for Type 1 frequency domain allocation (i.e. RIV based), the UE may determine the number $M$ of parallel scheduled TBs as $\min\left(\left\lceil \frac{L}{R} \right\rceil, T\right)$, where $L$ is the number of scheduled PRBs (i.e. the L defined by the RIV), R is the minimum number of PRBs per TB and T is the maximum number of parallel TBs per spatial layer.

- The UE may then determine the frequency domain resource allocation for each of the M parallel TBs as:

   ◦ For Type 0 frequency domain resource allocation,

      ▪ Alt. 1 - equal bandwidth size except for one TB (e.g. the last (or first) TB): the resource allocation of *m*-th TB, may be determined as the scheduled RBGs from the *x*-th scheduled RBG to the *y*-th scheduled RBG. In the case that determination of M is based on the maximum number of PRBs per TB:

      - $x(m) = \lceil L/M \rceil * (m-1) + 1$ for m=1... M and

      - $y(m) = \lceil L/M \rceil * m$ for m = 1 ... M-1 and y(m)=L for m=M

      In the case that determination of M is based on the maximum number of parallel TBs:

      - $x(m) = \lfloor L/M \rfloor * (m - 1) + 1$ for m=1...M and

      - $y(m) = \lfloor L/M \rfloor * m$ for m=1...M-1 and y(m)=L for m=M

- Alt. 2 - equal bandwidth sizes as much as possible: the resource allocation of *m*-th TB may be determined as the scheduled RBGs from the *x*-th scheduled RBG to the y-th scheduled RBG. In the case that determination of M is based on the maximum number of PRBs per TB, the resource allocation is using

$$N = L \bmod \lceil K/P \rceil$$ :

- If N=0 (i.e. equal bandwidth size - as for Alt. 1),

  ○ $x(m) = \lceil L/M \rceil * (m-1) + 1$ for m=1...M and

  ○ $y(m) = \lceil L/M \rceil * m$ for m=1...M-1 and and y(m)=L for m=M
  • If N>0,

  ○ For m=1..N: $x(m) = \lceil L/M \rceil * (m-1) + 1$ , $y(m) = \lceil L/M \rceil * m$

  ○ For m=N+1...M: $x(m) = N * \lceil L/M \rceil + (m-N-1) * \lfloor L/M \rfloor + 1$ ,

  $y(m) = N * \lceil L/M \rceil + (m-N) * \lfloor L/M \rfloor$

In the case that determination of M is based on the maximum number of parallel TBs, the resource allocation is using $$N = L \bmod \lceil R/P \rceil$$ :
• If N=0 (i.e. equal bandwidth size - as for Alt. 1),

  ○ $x(m) = \lfloor L/M \rfloor * (m-1) + 1$ for m=1...M and

  ○ $y(m) = \lfloor L/M \rfloor * m$ for m=1...M-1 and y(m)=L for m=M

• If N>0,

  ○ For m=1..N: $x(m) = \lceil L/M \rceil * (m-1) + 1$ , $y(m) = \lceil L/M \rceil * m$

  ○ For m=N+1...M: $x(m) = N * \lceil L/M \rceil + (m-N-1) * \lfloor L/M \rfloor + 1$ ,

  $y(m) = N * \lceil L/M \rceil + (m-N) * \lfloor L/M \rfloor$

- Alt. 3 - flexible number of RBGs per TB (e.g. for better MCS setting in frequency): in addition to the bitmap of scheduled RBGs, the number of RBGs per TB *i*, $L_i$, is indicated separately for each TB.

- Each TB occupies consecutive RBGs from the set of scheduled RBGs (in other words, the allocations for different TBs are not interlaced. The scheduled RBGs do not need to be consecutive in frequency).

  ○ First TB occupies first $L_1$ RBGs from the scheduled RBGs, the second TB occupies the scheduled RBGs from $L_1$+1 to $L_2$, etc.

- This alternative is relevant for the case where the number of parallel TBs is indicated explicitly in the scheduling DCI

○ For Type 1 frequency domain resource allocation with indicated S & L (Start & Length) via RIV,

- Alt. 1 - equal bandwidth size except for one TB (e.g. the last (or first) TB): the resource allocation of $m$-th TB may be determined through the starting PRB $S(m)$ and length L(m). In the case that determination of M is based on the maximum number of PRBs per TB:

$$S(m) = \lceil L/M \rceil * (m-1) + 1 \quad \text{for m=1...M and}$$

$$L(m) = \lceil L/M \rceil \quad \text{for m=1...M-1 and} \quad L(m) = L - (M-1) * \lceil L/M \rceil \quad \text{for m=M In the case that determination of M is based on the maximum number of PRBs per TB:}$$

$$S(m) = \lfloor L/M \rfloor * (m-1) + 1 \quad \text{for m=1...M and}$$

$$L(m) = \lfloor L/M \rfloor \text{ for m=1...M-1} \quad \text{and } L(m) = L - (M-1) * [L/M] \text{ for m=M}$$

- Alt. 2 - equal bandwidth sizes as much as possible: the resource allocation of $m$-th TB may be determined through the starting PRB $S(m)$ and length L(m) using $N = L \bmod M$. In the case that determination of M is based on the maximum number of PRBs per TB:

- If N=0 (i.e. equal bandwidth size - as for Alt. 1),

$$S(m) = S + \lceil L/M \rceil * (m-1) \quad \text{for m=1...M and}$$

$$L(m) = \lceil L/M \rceil \text{ for m=1...M-1} \quad \text{for m=1...M-1 and} \quad L(m) = L - (M-1) * \lceil L/M \rceil \quad \text{for m=M}$$

- If N>0 (unequal bandwidth sizes, first N TBs by 1 RB larger),

  ○ For m=1.. N: $\quad S(m) = S + \lceil L/M \rceil * (m-1) \quad \text{and} \quad L(m) = \lceil L/M \rceil$

  ○ For m=N+1...M: $\quad S(m) = S + N * \lceil L/M \rceil + (m-N-1) * \lfloor L/M \rfloor + 1$,

$$L(m) = \lfloor L/M \rfloor \quad \text{In the case that determination of M is based on the maximum number of parallel TBs-}$$

- If N=0 (i.e. equal bandwidth sizes - as for Alt. 1),

  ○ $S(m) = \lfloor L/M \rfloor * (m-1) + 1 \quad \text{for m=1...M and}$

  ○ $L(m) = \lfloor L/M \rfloor \quad \text{for m=1...M-1 and } L(m) = L - (M-1) * \lfloor L/M \rfloor \text{ for m=M}$

- If N>0 (unequal bandwidth sizes, first N TBs by 1 RB larger),

  ○ For m=1.. N: $\quad S(m) = S + \lceil L/M \rceil * (m-1) \quad \text{and} \quad L(m) = \lceil L/M \rceil$

  ○ For m=N+1...M: $\quad S(m) = S + N * \lceil L/M \rceil + (m-N-1) * \lfloor L/M \rfloor + 1 \quad L(m) = \lfloor L/M \rfloor$

- Alt. 3 - flexible bandwidth sizes per TB (e.g. for better MCS setting in frequency), while parallel TBs are contiguous in frequency: resource allocation is given with a starting RB and length over all M TBs together with M-1 indications of TB specific allocation lengths.

- This alternative is relevant for the case where the number of parallel TBs is indicated explicitly in the scheduling DCI

In another embodiments, the frequency domain resource allocation for each TB is indicated separately.

In some example embodiments, the frequency domain resource allocation indication for each TB is defined partially based on the max TB bandwidth size (RB), to reduce the number of bits required for FDRA. In such example embodiments, the UE may determine the location and bandwidth size of the TBs based on a rule and some constraints, such as that the TBs are fully contained in the CBW (or BWP, if any) and do not overlap.

○ In case of Type 1 frequency domain resource allocation with indicated S & L (Start & Length) via RIV (resource indication value), the range of RIV values may be restricted to cover allocation lengths up to max TB bandwidth size (RB).

■ RIV may be determined based on existing equations (which means that some of the RIV values are not used with allocations lengths less than or equal to max TB bandwidth size (RB).

■ RIV may be determined differently, e.g., by allocating RIV values consequently to all possible Start & Length combinations, in the order of increasing starting RB first, increasing allocation length second. In this case:

$$RIV = \left(N_{BWP}^{size} - (L_{RBs} - 1)/2\right) L_{RBs} - \left(N_{BWP}^{size} - L_{RBs} + 1\right) +$$

$$RB_{start} = \left(N_{BWP}^{size} - L_{RBs}/2 + 1\right)(L_{RBs} - 1) + RB_{start}$$

Parallel TBs may have

- the same or different MCS
- the same or different HARQ process number, RV & NDI indication

Parallel TBs may follow the same (UL) power control loop.

PDSCH transmissions of parallel TBs may follow the same (single-TRP transmission) or different (multi-TRP) TCI state(s) that provide UE information based on which the UE can estimate the parameters, like Doppler spread, Doppler shift, average time delay, delay spread and/or receive spatial filter (receive beam) for the reception of each TB. Correspondingly in uplink, the TCI state based on which the UE performs UL transmission may be common to parallel TBs or different (UE has capability to transmit simultaneously using two different TCI states, i.e. using two different TX beams). The related TCI info may be included in the DCI scheduling multiple parallel TBs.

In one example embodiment, the UE may be dynamically informed (e.g. via DCI) about the Max TB bandwidth size(RB)assumption that UE can assume for the coming scheduled PxSCH transmissions. For instance, if the higher layer configured BWP size(RB) is Max TB bandwidth size(RB), the DCI may update the assumption that the current BWP size(RB) would be $2 \times TB_{max}$. That could be used as UE power saving enabler that the UE could keep certain FFTs switched off if the current BWP bandwidth size(RB) assumption would allow that. There could be some application time defined after the UE receives the DCI indication after which the UE is expected to assume the indicated BWP bandwidth size(RB).

According to some example embodiments, the is aware of the following parameters:

- BWP (or CBW) size, and at least one of

    ○ Max TB bandwidth size(RB);

    ○ Maximum number of parallel TBs.

These parameters may be conveyed from the BS to the UE via RRC signaling. Depending on the embodiment, the parameters may impact also the DCI content and/or size (e.g. the maximum number of parallel TBs may define the number of MCS/NDI/RV/HPI fields, and/or the size of certain bit fields such as FDRA). RRC parameters used according to some example embodiments may be configured using one or more information elements including e.g. IE BWP, IE BWP-Downlink, IE BWP-Uplink, IE- BWP-DownlinkCommon, IE BWP-DownlinkDedicated, BWP-UplinkCommon, BWP-UplinkDedicated, IE PDSCH-Config, IE PDSCH-ConfigCommon, IE PUSCH-Config, IE PUSCH-ConfigCommon.

Dynamic scheduling operation:

- DCI indicates the number of parallel TBs

- DCI indicates the resource allocation of a TB as

  ○ Embodiment 1: the total frequency domain resource allocation across all the TBs

    ■ The UE determines the resource allocation for each of the TBs based on the scheduled number of TBs *M*
    ■ The scheduled number of TBs *M* may be dynamically indicated in the DCI or the UE may determine the number based on the number of scheduled RBGs and/or RBs and the configured max TB bandwidth size (RB)

  ○ Embodiment 2: the DCI may directly indicate the frequency domain resource allocation for the M scheduled TBs

    ■ There may be M blocks of FDRA information in the DCI or alternatively Q blocks of FDRA information, where Q is the configured maximum number of parallel TBs

- The DCI indicates the MCS for the M TBS

  ○ Alt. 1: a single MCS value is provided applicable to all the parallel TBs
  ○ Alt. 2: separate MCS (i.e. M or Q blocks of MCS information) may provided for the parallel TBs

- The DCI indicates the HPN, RV and NDI for the parallel TBs

  ○ Alt. 1: a single HPN, RV and NDI may be applicable for all the TBs

    ■ A type of 'CBG-based' PDSCH / PUSCH operation may be operated here denoted here as 'Transport-BlockGroup-based' ("TBG-based") PDSCH& PUSCH scheduling and TBG-based HARQ feedbck, where the TBs are split into up to R TB groups allowing for retransmission of only a part of the scheduled parallel TBs

  ○ Alt. 2: separate HPN, RV and NDI indication for each TB

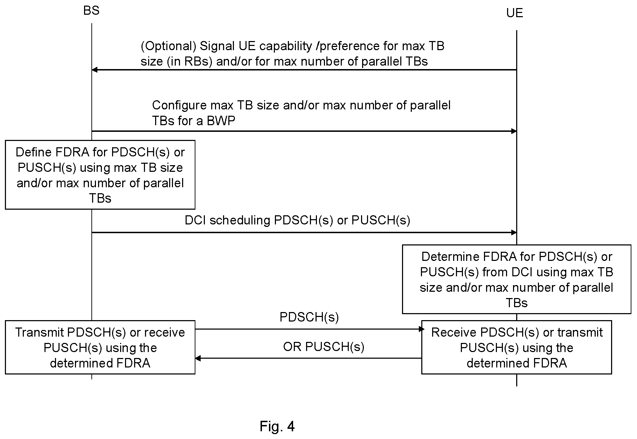

A signaling diagram according to some example embodiments is shown in Fig. 4. This signaling diagram is for single-TRP scenario. An extension to multiple-TRP scenario is straightforward. Namely, for a multi-TRP scenario, the TCI state in DCI is TB specific.

As shown in Fig. 4, optionally, the UE may indicate to the BS its capability and/or preference with respect to at least one of a maximum TB bandwidth size and a maximum number of parallel TBs.

BS configures in UE maximum TB bandwidth size and/or max number of parallel TPs in the CBW or BWP, if any. If some default values are defined in a 3GPP specification and BS would like to apply these default values, this configuration may be omitted.

BS defines the frequency domain resource allocation for the respective shared channel (PDSCH or PUSCH) using maximum TB bandwidth size and/or max number of parallel TPs and schedules the transmission by DCI. UE determines FDRA for the respective shared channel from the received scheduling information and maximum TB bandwidth size and/or max number of parallel TPs received from BS (or specified by 3GPP), using a rule.

Depending on the shared channel (PDSCH or PUSCH), one of BS and UE transmits the shared channel and the other one receives the shared channel. For the transmission, a data block of the respective shared channel is received as a whole from the MAC layer of the transmitter, and encoded and modulated as a whole using the MCS of the respective transport block. For the reception, the received modulated and encoded data block is demodulated and decoded as a whole using the MCS of the respective transport block to obtain a data block, and the data block is provided as a whole to the MAC layer of the receiver.

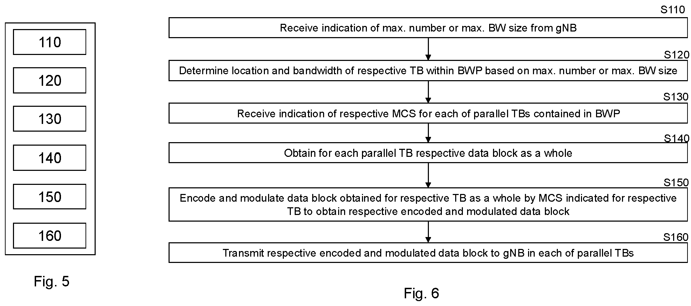

Fig. 5 shows an apparatus according to an example embodiment. The apparatus may be a terminal (such as a UE, a MTC device, etc.) or an element thereof. Fig. 6 shows a method according to an example embodiment. The apparatus according to Fig. 5 may perform the method of Fig. 6 but is not limited to this method. The method of Fig. 6 may be performed by the apparatus of Fig. 5 but is not limited to being performed by this apparatus. Figs. 5 and 6 are described with reference to a BWP. However, in some example embodiments, the BWP may be replaced by a channel having a bandwidth.

The apparatus comprises first means for receiving 110, means for determining 120, second means for receiving 130, means for obtaining 140, means for encoding and modulating 150, and means for transmitting 160. The first means for receiving 110, means for determining 120, second means for receiving 130, means for obtaining 140, means for encoding and modulating 150, and means for transmitting 160 may be a first receiving means, determining means, second receiving means, obtaining receiving means, encoding and modulating means, and transmitting means, respectively. The first means for receiving 110, means for determining 120, second means for receiving 130, means for obtaining 140, means for encoding and modulating 150, and means for transmitting 160 may be a first receiver, determiner, second receiver, obtainer, encoder and modulator, and transmitter, respectively. The first means for receiving 110, means for determining 120, second means for receiving 130, means for obtaining 140, means for encoding and modulating 150, and means for transmitting 160 may be a first receiving processor, determining processor, second receiving processor, obtaining receiving processor, encoding and modulating processor, and transmitting processor, respectively.

The means for receiving 110 receives, from a base station, an indication of at least one of a maximum number and a maximum bandwidth size (S110). The maximum number indicates a maximum number of parallel transport blocks. The maximum bandwidth size indicates a maximum bandwidth size of the transport blocks.

The means for determining 120 determines, for each of plural parallel transport blocks of a spatial layer contained in a bandwidth part, a location and a bandwidth of the respective transport block within the bandwidth part (S120). The determination is based on a rule and a bandwidth of the bandwidth part such that each of the transport blocks is fully located within the bandwidth part, the transport blocks do not overlap. In addition, the locations and bandwidth of the transport blocks are determined such that a number of the transport blocks is not larger than the maximum number (if the maximum number is received in S110) and/or such that none of the transport blocks has a bandwidth size larger than the maximum bandwidth size (if the maximum bandwidth size is received in S110).

The means for receiving 130 receives, from the base station for each of the parallel transport blocks contained in the bandwidth part, an indication of a respective modulation and coding scheme (S130).

The means for obtaining 140 obtains, from a MAC layer for each parallel transport block of a set of parallel transport blocks, a respective data block as a whole (S140). The parallel transport blocks of the set belong to the parallel transport blocks contained in the bandwidth part. The set may comprise all the parallel transport blocks contained in the bandwidth part or a subset thereof. Each of the data blocks may be a MAC PDU.

The means for encoding and modulating 150 encodes and modulates, for each parallel transport block of the set, the data block obtained for the respective transport block as a whole (S150). For the encoding and modulating, the modulation and coding scheme received in S140 for the respective transport block is used. Thus, for each of the transport blocks of the set, a respective encoded and modulated data block is obtained.

The means for transmitting 160 transmits, to the base station in each transport block of the parallel transport blocks of the set, the respective encoded and modulated data block obtained in S150 (S160).

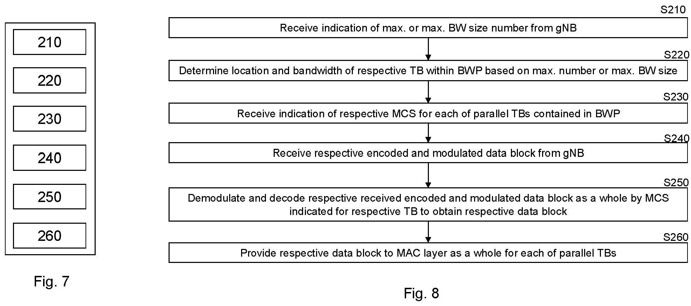

Fig. 7 shows an apparatus according to an example embodiment. The apparatus may be a terminal (such as a UE, a MTC device, etc.) or an element thereof. Fig. 8 shows a method according to an example embodiment. The apparatus according to Fig. 7 may perform the method of Fig. 8 but is not limited to this method. The method of Fig. 8 may be performed by the apparatus of Fig. 7 but is not limited to being performed by this apparatus. Figs. 7 and 8 are described with reference to a BWP. However, in some example embodiments, the BWP may be replaced by a channel having a bandwidth.

The apparatus comprises first means for receiving 210, means for determining 220, second means for receiving 230, third means for receiving 240, means for demodulating and decoding 250, and means for providing 260. The first means for receiving 210, means for determining 220, second means for receiving 230, third means for receiving 240, means for demodulating and decoding 250, and means for providing 260 may be a first receiving means, determining means, second receiving means, third receiving means, demodulating and decoding means, and providing means, respectively. The first means for receiving 210, means for determining 220, second means for receiving 230, third means for receiving 240, means for demodulating and decoding 250, and means for providing 260 may be a first receiver, determiner, second receiver, third receiver, demodulator and decoder, and provider, respectively. The first means for receiving 210, means for determining 220, second means for receiving 230, third means for receiving 240, means for demodulating and decoding 250, and means for providing 260 may be a first receiving processor, determining processor, second receiving processor, third receiving processor, demodulating and decoding processor, and providing processor, respectively.

The means for receiving 210 receives, from a base station, an indication of at least one of a maximum number and a maximum bandwidth size (S210). The maximum number indicates a maximum number of parallel transport blocks. The maximum bandwidth size indicates a maximum bandwidth size of the transport blocks.

The means for determining 220 determines, for each of plural parallel transport blocks of a spatial layer contained in a bandwidth part, a location and a bandwidth of the respective transport block within the bandwidth part (S220). The determination is based on a rule and a bandwidth of the bandwidth part such that each of the transport blocks is fully located within the bandwidth part, the transport blocks do not overlap. In addition, the locations and bandwidth of the transport blocks are determined such that a number of the transport blocks is not larger than the maximum number (if the maximum number is received in S210) and/or such that none of the transport blocks has a bandwidth size larger than the maximum bandwidth size (if the maximum bandwidth size is received in S210).

The means for receiving 230 receives, from the base station for each of the parallel transport blocks contained in the bandwidth part, an indication of a respective modulation and coding scheme (S230).

The second means for receiving 240 receives, from the base station in each of one or more transport blocks of a set of parallel transport blocks, a respective encoded and modulated data block (S240). The parallel transport blocks of the set belong to the parallel transport blocks contained in the bandwidth part. The set may comprise all the parallel transport blocks contained in the bandwidth part or a subset thereof. Each of the data blocks may be a MAC PDU.

The means for demodulating and decoding 250 demodulates and decodes, for each parallel transport block of the set of parallel transport blocks, the respective received encoded and modulated data block as a whole (S250). For the demodulating and decoding, the modulation and coding scheme indicated for the respective transport block in S230 is used. Thus, for each of the parallel transport blocks of the set, a respective data block is obtained.

The means for providing 260 provides, for each transport block of the parallel transport blocks of the set, the respective data block to a MAC layer as a whole (S260). UE may also provide a respective HARQ-ACK feedback for each parallel TB.

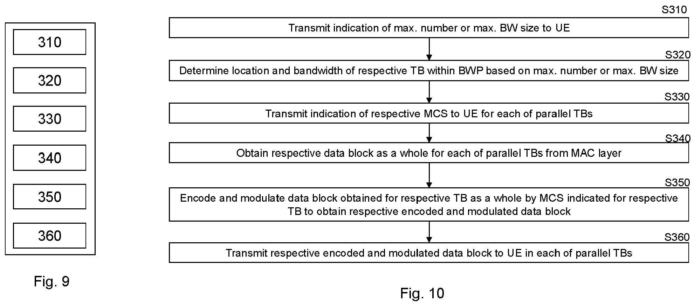

Fig. 9 shows an apparatus according to an example embodiment. The apparatus may be a base station (such as a gNB or eNB, etc.) or an element thereof. Fig. 10 shows a method according to an example embodiment. The apparatus according to Fig. 9 may perform the method of Fig. 10 but is not limited to this method. The method of Fig. 10 may be performed by the apparatus of Fig. 9 but is not limited to being performed by this apparatus. Figs. 9 and 10 are described with reference to a BWP. However, in some example embodiments, the BWP may be replaced by a channel having a bandwidth.

The apparatus comprises first means for transmitting 310, means for determining 320, second means for transmitting 330, means for obtaining 340, means for encoding and modulating 350, and third means for transmitting 360. The first means for transmitting 310, means for determining 320, second means for transmitting 330, means for obtaining 340, means for encoding and modulating 350, and third means for transmitting 360 may be a first transmitting means, determining means, second transmitting means, obtaining transmitting means, encoding and modulating means, and third transmitting means, respectively. The first means for transmitting 310, means for determining 320, second means for transmitting 330, means for obtaining 340, means for encoding and modulating 350, and third means for transmitting 360 may be a first transmitter, determiner, second transmitter, obtainer, encoder and modulator, and third transmitter, respectively. The first means for transmitting 310, means for determining 320, second means for transmitting 330, means for obtaining 340, means for encoding and modulating 350, and third means for transmitting 360 may be a first transmitting processor, determining processor, second transmitting processor, obtaining transmitting processor, encoding and modulating processor, and third transmitting processor, respectively.

The first means for transmitting 310 transmits, to a terminal, an indication of at least one of a maximum number and a maximum bandwidth size (S310). The maximum number indicates a maximum number of parallel transport blocks. The maximum bandwidth size indicates a maximum bandwidth size of the transport blocks.

The means for determining 320 determines, for each of plural parallel transport blocks of a spatial layer contained in a bandwidth part, a location and a bandwidth of the respective transport block within the bandwidth part (S320). The determination is based on a rule and a bandwidth of the bandwidth part such that each of the transport blocks is fully located within the bandwidth part, the transport blocks do not overlap. In addition, the locations and bandwidth of the transport blocks are determined such that a number of the transport blocks is not larger than the maximum number (if the maximum number is transmitted in S310) and/or such that none of the transport blocks has a bandwidth size larger than the maximum bandwidth size (if the maximum bandwidth size is transmitted in S310).

The second means for transmitting 330 transmits, to the terminal for each of the parallel transport blocks contained in the bandwidth part, an indication of a respective modulation and coding scheme (S330).

The means for obtaining 340 obtains, from a MAC layer for each parallel transport block of a set of parallel transport blocks, a respective data block as a whole (S340). The parallel transport blocks of the set belong to the parallel transport blocks contained in the bandwidth part. The set may comprise all the parallel transport blocks contained in the bandwidth part or a subset thereof. Each of the data blocks may be a MAC PDU.

The means for encoding and modulating 350 encodes and modulates, for each parallel transport block of the set, the data block obtained for the respective transport block as a whole (S350). For the encoding and modulating, the modulation and coding scheme received in S340 for the respective transport block is used. Thus, for each of the transport blocks of the set, a respective encoded and modulated data block is obtained.

The third means for transmitting 360 transmits, to the terminal in each transport block of the parallel transport blocks of the set, the respective encoded and modulated data block obtained in S350 (S360).

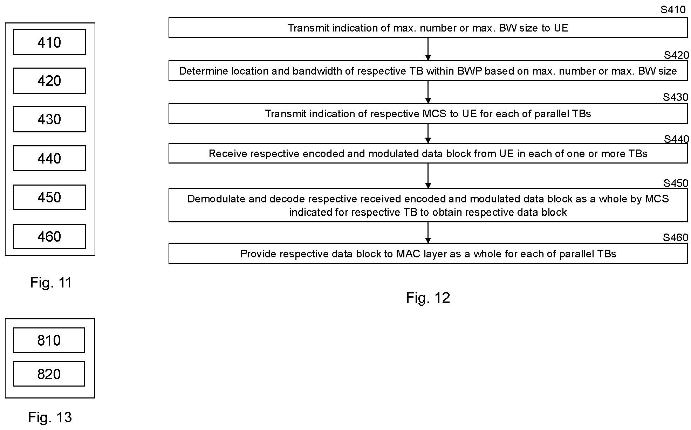

Fig. 11 shows an apparatus according to an example embodiment. The apparatus may be a base station (such as a gNB or eNB, etc.) or an element thereof. Fig. 12 shows a method according to an example embodiment. The apparatus according to Fig. 11 may perform the method of Fig. 12 but is not limited to this method. The method of Fig. 12 may be performed by the apparatus of Fig. 11 but is not limited to being performed by this apparatus. Figs. 11 and 12 are described with reference to a BWP. However, in some example embodiments, the BWP may be replaced by a channel having a bandwidth.

The apparatus comprises first means for transmitting 410, means for determining 420, second means for transmitting 430, means for receiving 440, means for demodulating and decoding 450, and means for providing 460. The first means for transmitting 410, means for determining 420, second means for transmitting 430, means for receiving 440, means for demodulating and decoding 450, and means for providing 460 may be a first transmitting means, determining means, second transmitting means, receiving means, demodulating and decoding means, and providing means, respectively. The first means for transmitting 410, means for determining 420, second means for transmitting 430, means for receiving 440, means for demodulating and decoding 450, and means for providing 460 may be a first transmitter, determiner, second transmitter, receiver, demodulator and decoder, and provider, respectively. The first means for transmitting 410, means for determining 420, second means for transmitting 430, means for receiving 440, means for demodulating and decoding 450, and means for providing 460 may be a first transmitting processor, determining processor, second transmitting processor, receiving processor, demodulating and decoding processor, and providing processor, respectively.

The first means for transmitting 410 transmits, to a terminal, an indication of at least one of a maximum number and a maximum bandwidth size (S410). The maximum number indicates a maximum number of parallel transport blocks. The maximum bandwidth size indicates a maximum bandwidth size of the transport blocks.

The means for determining 420 determines, for each of plural parallel transport blocks of a spatial layer contained in a bandwidth part, a location and a bandwidth of the respective transport block within the bandwidth part (S420). The determination is based on a rule and a bandwidth of the bandwidth part such that each of the transport blocks is fully located within the bandwidth part, the transport blocks do not overlap. In addition, the locations and bandwidth of the transport blocks are determined such that a number of the transport blocks is not larger than the maximum number (if the maximum number is transmitted in S410) and/or such that none of the transport blocks has a bandwidth size larger than the maximum bandwidth size (if the maximum bandwidth size is transmitted in S410).

The second means for transmitting 430 transmits, to the terminal for each of the parallel transport blocks contained in the bandwidth part, an indication of a respective modulation and coding scheme (S430).

The means for receiving 440 receives, from the terminal in each of one or more transport blocks of a set of parallel transport blocks, a respective encoded and modulated data block (S440). The parallel transport blocks of the set belong to the parallel transport blocks contained in the bandwidth part. The set may comprise all the parallel transport blocks contained in the bandwidth part or a subset thereof. Each of the data blocks may be a MAC PDU.

The means for demodulating and decoding 450 demodulates and decodes, for each parallel transport block of the set of parallel transport blocks, the respective received encoded and modulated data block as a whole (S450). For the demodulating and decoding, the modulation and coding scheme indicated for the respective transport block in S430 is used. Thus, for each of the parallel transport blocks of the set, a respective data block is obtained.

The means for providing 460 provides, for each transport block of the parallel transport blocks of the set, the respective data block to a MAC layer as a whole (S460).

Fig. 13 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 6, or Fig. 8, or Fig. 10, or Fig. 12.

Some example embodiments are explained with respect to 6G. However, other example embodiments may be employed in other 3GPP generations, such as 4G, 5G, 7G, etc., or in other environments where data blocks as a whole are transmitted in respective transport blocks.

Some example embodiments are explained for OFDM for processing in the frequency domain. However, the invention is not limited to OFDM. For example, it may be applied to DFT-s-OFDM, too.

Some example embodiments are explained with FFT size of not more than 4096 being a "small FFT", and larger FFT sizes being a "big FFT". However, the border between "small FFT" and "big FFT" may be different from 4096. For example, it may be 2048 or 8192.

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a terminal (such as a UE) or an element thereof (which may or may not be actually integrated in the terminal), an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a base station (such as a gNB or eNB) or an element thereof (which may or may not be actually integrated in the base station), an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

**Claims**

1. Apparatus comprising:

   means for receiving, from a base station, an indication of at least one of a maximum number or a maximum bandwidth size;
   means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

      if the indication of the maximum bandwidth size is received, none of the plural parallel transport blocks has a bandwidth size larger than the maximum bandwidth size, and,
      if the indication of the maximum number is received, a number of the plural parallel transport blocks is not larger than the maximum number;

   means for receiving, from the base station for each of the plural parallel transport blocks contained in the bandwidth part or the channel, respectively, an indication of a respective modulation and coding scheme;
   means for obtaining, from a medium access control layer for each parallel transport block of a set of parallel transport blocks among the plural parallel transport blocks contained in the bandwidth part or the channel, respectively, a respective data block as a whole;
   means for encoding and modulating, for each parallel transport block of the set, the data block obtained for the respective transport block as a whole by the modulation and coding scheme indicated for the respective transport block to obtain a respective encoded and modulated data block;
   means for transmitting, to the base station in each transport block of the parallel transport blocks of the set, the respective encoded and modulated data block.

2. Apparatus comprising:

   means for receiving, from a base station, an indication of at least one of a maximum number or a maximum bandwidth size;
   means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

means for receiving, from the base station for each of the plural parallel transport blocks contained in the bandwidth part or the channel, respectively, an indication of a respective modulation and coding scheme;
means for receiving, from the base station in each of one or more transport blocks of a set of parallel transport blocks among the plural parallel transport blocks contained in the bandwidth part or the channel, respectively, a respective encoded and modulated data block;
means for demodulating and decoding, for each parallel transport block of the set of parallel transport blocks, the respective received encoded and modulated data block as a whole by the modulation and coding scheme indicated for the respective transport block to obtain a respective data block;
means for providing, for each transport block of the parallel transport blocks of the set, the respective data block to a medium access control layer as a whole.

3. The apparatus according to any of claims 1 to 2, wherein the rule is predefined.

4. The apparatus according to any of claims 1 to 3, further comprising

means for receiving, from the base station, an indication of the rule;
means for retrieving the rule from a repository of rules based on the indication of the rule.

5. The apparatus according to any of claims 1 to 4, wherein at least one of the modulation and coding schemes indicated for the plural parallel transport blocks is different from another one of the modulation and coding schemes indicated for the plural parallel transport blocks.

6. The apparatus according to any of claims 1 to 5, wherein a guard band is not provided between at least two adjacent parallel transport blocks of the plural parallel transport blocks.

7. The apparatus according to any of claims 1 to 6, wherein at least one of the plural parallel transport blocks of the channel or the bandwidth part, respectively, comprises another transport block in a second spatial layer different from the first spatial layer.

8. Apparatus comprising:

means for transmitting, to a terminal, an indication of at least one of a maximum number or a maximum bandwidth size;
means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,
if the indication of the maximum number is received, a number of the plural parallel transport blocks is not larger than the maximum number;

means for transmitting, to the terminal for each of the plural parallel transport blocks contained in the bandwidth part or the channel, respectively, an indication of a respective modulation and coding scheme;
means for obtaining, from a medium access control layer for each parallel transport block of a set of parallel transport blocks among the plural parallel transport blocks contained in the bandwidth part or the channel, respectively, a respective data block as a whole;

means for encoding and modulating, for each parallel transport block of the set, the data block obtained for the respective transport block as a whole by the modulation and coding scheme indicated for the respective transport block to obtain a respective encoded and modulated data block;

means for transmitting, to the terminal in each transport block of the parallel transport blocks of the set, the respective encoded and modulated data block.

9. Apparatus comprising:

means for transmitting, to a terminal, an indication of at least one of a maximum number or a maximum bandwidth size;

means for determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

means for transmitting, to the terminal for each of the plural parallel transport blocks contained in the bandwidth part or the channel, respectively, an indication of a respective modulation and coding scheme;

means for receiving, from the terminal in each of one or more transport blocks of a set of parallel transport blocks among the plural parallel transport blocks contained in the bandwidth part or the channel, respectively, a respective encoded and modulated data block;

means for demodulating and decoding, for each parallel transport block of the set of parallel transport blocks, the respective received encoded and modulated data block as a whole by the modulation and coding scheme indicated for the respective transport block to obtain a respective data block;

means for providing, for each transport block of the parallel transport blocks of the set, the respective data block to a medium access control layer as a whole.

10. The apparatus according to any of claims 8 to 9, wherein the rule is predefined.

11. The apparatus according to any of claims 8 to 10, further comprising

means for retrieving the rule from a repository of rules;
means for indicating the rule to the terminal..

12. The apparatus according to any of claims 8 to 11, wherein at least one of the modulation and coding schemes indicated for the plural parallel transport blocks is different from another one of the modulation and coding schemes indicated for the plural parallel transport blocks.

13. The apparatus according to any of claims 8 to 12, further comprising
means for informing the terminal explicitly on the locations and bandwidths of the plural parallel transport blocks.

14. The apparatus according to any of claims 8 to 13, wherein a guard band is not provided between at least two adjacent parallel transport blocks of the plural parallel transport blocks.

15. The apparatus according to any of claims 8 to 14, wherein at least one of the plural parallel transport blocks the channel or the bandwidth part, respectively, comprises another transport block in a second spatial layer different from the first spatial layer.

16. Method comprising:

receiving, from a base station, an indication of at least one of a maximum number or a maximum bandwidth size;
determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

receiving, from the base station for each of the plural parallel transport blocks contained in the bandwidth part or the channel, respectively, an indication of a respective modulation and coding scheme;

obtaining, from a medium access control layer for each parallel transport block of a set of parallel transport blocks among the plural parallel transport blocks contained in the bandwidth part or the channel, respectively, a respective data block as a whole;

encoding and modulating, for each parallel transport block of the set, the data block obtained for the respective transport block as a whole by the modulation and coding scheme indicated for the respective transport block to obtain a respective encoded and modulated data block;

transmitting, to the base station in each transport block of the parallel transport blocks of the set, the respective encoded and modulated data block.

**17.** Method comprising:

receiving, from a base station, an indication of at least one of a maximum number or a maximum bandwidth size;

determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

receiving, from the base station for each of the plural parallel transport blocks contained in the bandwidth part or the channel, respectively, an indication of a respective modulation and coding scheme;

receiving, from the base station in each of one or more transport blocks of a set of parallel transport blocks among the plural parallel transport blocks contained in the bandwidth part or the channel, respectively, a respective encoded and modulated data block;

demodulating and decoding, for each parallel transport block of the set of parallel transport blocks, the respective received encoded and modulated data block as a whole by the modulation and coding scheme indicated for the respective transport block to obtain a respective data block;

providing, for each transport block of the parallel transport blocks of the set, the respective data block to a medium access control layer as a whole.

**18.** Method comprising:

transmitting, to a terminal, an indication of at least one of a maximum number or a maximum bandwidth size;

determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

transmitting, to the terminal for each of the plural parallel transport blocks contained in the bandwidth part or the channel, respectively, an indication of a respective modulation and coding scheme;

obtaining, from a medium access control layer for each parallel transport block of a set of parallel transport blocks among the plural parallel transport blocks contained in the bandwidth part or the channel, respectively, a respective data block as a whole;

encoding and modulating, for each parallel transport block of the set, the data block obtained for the respective transport block as a whole by the modulation and coding scheme indicated for the respective transport block to obtain a respective encoded and modulated data block;

transmitting, to the terminal in each transport block of the parallel transport blocks of the set, the respective encoded and modulated data block.

19. Method comprising:

transmitting, to a terminal, an indication of at least one of a maximum number or a maximum bandwidth size;

determining, for each of plural parallel transport blocks of a first spatial layer contained in a bandwidth part or a channel, a location and a bandwidth of the respective transport block within the bandwidth part or the channel, respectively, based on a rule and a bandwidth of the bandwidth part or the channel, respectively, such that each of the plural parallel transport blocks is fully located within the bandwidth part or the channel, respectively, the plural parallel transport blocks do not overlap, and such that:

if the indication of the maximum bandwidth size is received, none of the plural parallel transport blocks has a bandwidth size larger than the maximum bandwidth size, and,

if the indication of the maximum number is received, a number of the plural parallel transport blocks is not larger than the maximum number;

transmitting, to the terminal for each of the plural parallel transport blocks contained in the bandwidth part or the channel, respectively, an indication of a respective modulation and coding scheme;

receiving, from the terminal in each of one or more transport blocks of a set of parallel transport blocks among the plural parallel transport blocks contained in the bandwidth part or the channel, respectively, a respective encoded and modulated data block;

demodulating and decoding, for each parallel transport block of the set of parallel transport blocks, the respective received encoded and modulated data block as a whole by the modulation and coding scheme indicated for the respective transport block to obtain a respective data block;

providing, for each transport block of the parallel transport blocks of the set, the respective data block to a medium access control layer as a whole.

CBW: 400 MHz, 30 kHz SCS

BWP: up-to 1100RBs (13200 REs)

per spatial layer: 1 TB within the BWP (addressed by FDRA)

Fig. 1

CBW: Max 400 MHz (or 500 MHz) with 30 kHz SCS

BWP: up-to 1100RBs (13200 REs)

per spatial layer: 1 TB

per spatial layer: 1 TB

per spatial layer: 1 TB

per spatial layer: 1 TB

Fig. 2

CBW: Max 400 MHz (or 500 MHz) with 30 kHz SCS

BWP: up-to 550RBs (6600 REs)

per spatial layer: 1 TB

per spatial layer: 1 TB

BWP: up-to 550RBs (6600 REs)

per spatial layer: 1 TB

per spatial layer: 1 TB

Fig. 3

BS                                                                          UE

(Optional) Signal UE capability /preference for max TB
size (in RBs) and/or for max number of parallel TBs

Configure max TB size and/or max number of parallel
TBs for a BWP

Define FDRA for PDSCH(s) or
PUSCH(s) using max TB size
and/or max number of parallel
TBs

DCI scheduling PDSCH(s) or PUSCH(s)

Determine FDRA for PDSCH(s) or
PUSCH(s) from DCI using max TB
size and/or max number of parallel
TBs

PDSCH(s)

Transmit PDSCH(s) or receive
PUSCH(s) using the
determined FDRA

OR PUSCH(s)

Receive PDSCH(s) or transmit
PUSCH(s) using the
determined FDRA

Fig. 4

EP 4 560 956 A1

| 110 |
|-----|
| 120 |
| 130 |
| 140 |
| 150 |
| 160 |

Fig. 5

S110
Receive indication of max. number or max. BW size from gNB

S120
Determine location and bandwidth of respective TB within BWP based on max. number or max. BW size

S130
Receive indication of respective MCS for each of parallel TBs contained in BWP

S140
Obtain for each parallel TB respective data block as a whole

S150
Encode and modulate data block obtained for respective TB as a whole by MCS indicated for respective TB to obtain respective encoded and modulated data block

S160
Transmit respective encoded and modulated data block to gNB in each of parallel TBs

Fig. 6

S210 Receive indication of max. or max. BW size number from gNB

S220 Determine location and bandwidth of respective TB within BWP based on max. number or max. BW size

S230 Receive indication of respective MCS for each of parallel TBs contained in BWP

S240 Receive respective encoded and modulated data block from gNB

S250 Demodulate and decode respective received encoded and modulated data block as a whole by MCS indicated for respective TB to obtain respective data block

S260 Provide respective data block to MAC layer as a whole for each of parallel TBs

Fig. 8

210
220
230
240
250
260

Fig. 7

310

320

330

340

350

360

Fig. 9

S310
Transmit indication of max. number or max. BW size to UE

S320
Determine location and bandwidth of respective TB within BWP based on max. number or max. BW size

S330
Transmit indication of respective MCS to UE for each of parallel TBs

S340
Obtain respective data block as a whole for each of parallel TBs from MAC layer

S350
Encode and modulate data block obtained for respective TB as a whole by MCS indicated for respective TB to obtain respective encoded and modulated data block

S360
Transmit respective encoded and modulated data block to UE in each of parallel TBs

Fig. 10

410

420

430

440

450

460

Fig. 11

810

820

Fig. 13

S410
Transmit indication of max. number or max. BW size to UE

S420
Determine location and bandwidth of respective TB within BWP based on max. number or max. BW size

S430
Transmit indication of respective MCS to UE for each of parallel TBs

S440
Receive respective encoded and modulated data block from UE in each of one or more TBs

S450
Demodulate and decode respective received encoded and modulated data block as a whole by MCS indicated for respective TB to obtain respective data block

S460
Provide respective data block to MAC layer as a whole for each of parallel TBs

Fig. 12

Europäisches
Patentamt

European
Patent Office

Office européen
des brevets

**EUROPEAN SEARCH REPORT**

Application Number

EP 23 21 1283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/086888 A1 (YI YUNJUNG [US]; DINAN ESMAEL HEJAZI [US] ET AL.) 28 April 2022 (2022-04-28) * paragraph [0183] – paragraph [0353] * ----- | 1–19 | INV. H04L5/00 ADD. H04L1/00 |
| X | WO 2022/169854 A1 (QUALCOMM INC [US]) 11 August 2022 (2022-08-11) * paragraph [0085] – paragraph [0160] * ----- | 1–19 | |

TECHNICAL FIELDS
SEARCHED      (IPC)

H04L
H04W

The present search report has been drawn up for all claims

| Place of search | Date of completion of the search | Examiner |
|---|---|---|
| The Hague | 15 April 2024 | Dupuis, Hervé |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 1283

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2024

| Patent document cited in search report | Publication date | Patent family member(s) | Publication date |
|---|---|---|---|
| WO 2022086888 A1 | 28-04-2022 | CN 116711251 A | 05-09-2023 |
| | | EP 4229794 A1 | 23-08-2023 |
| | | US 2024057108 A1 | 15-02-2024 |
| | | WO 2022086888 A1 | 28-04-2022 |
| WO 2022169854 A1 | 11-08-2022 | US 2024048342 A1 | 08-02-2024 |
| | | WO 2022169854 A1 | 11-08-2022 |

EPO FORM P0459

For more details about this annex : see Official Journal of the European Patent Office, No. 12/82